# EUROPEAN PATENT APPLICATION

(11) **EP 4 458 480 A1**
(43) Date of publication of application: **06.11.2024**
(21) Application number: 22914116.3
(22) Date of filing: 07.12.2022
(51) Int. Cl.: B07C 1/04, B07C 1/06

(54) **FULLY AUTOMATIC OBJECT SUPPLY SYSTEM FOR CROSS BELT SORTING SYSTEM**

(30) Priority: 31.12.2021 CN 202111663821
(71) Applicant: Wayzim Technology Co., Ltd., Wuxi, Jiangsu 214000 (CN)
(72) Inventor: OUYANG, Qingsheng, Wuxi, Jiangsu 214000 (CN); CAI, Ye, Wuxi, Jiangsu 214000 (CN); WANG, Qirong, Wuxi, Jiangsu 214000 (CN); ZHANG, Xu, Wuxi, Jiangsu 214000 (CN)
(74) Representative: Laufhütte, Dieter
(86) International application number: PCT/CN2022/137257
(87) International publication number: WO 2023/124861

(57) **Abstract**

A fully automatic object supply system for a cross belt sorting system. The fully automatic object supply system comprises a belt conveyor (2), wherein a spiral unpacking sliding groove (1) is formed in a feeding end of the belt conveyor (2); the belt conveyor (2) is sequentially provided, in a conveying direction, with a stacked-objects separating device (3), a scattering device (4), a single-object separating device (5), a roller centering machine (6), a pulling saw belt conveyor (7), a stacked-objects detecting device (8), an arriving-object detection device (9) and a balance wheel sorting machine (10), wherein the balance wheel sorting machine (10) is arranged at a tail section of a discharging end of the belt conveyor (2), the number of the balance wheel sorting machines (10) is one or more, and one side of the balance wheel sorting machine (10) is connected to a feeding end of a four-section fully automatic package supply machine (12).

## Description

### TEAHNICAL FIELD

The present invention relates to the technical field of sorting equipment, and in particular to a fully automatic object supply system for a cross-belt sorting system.

### BACKGROUND

At present, in the process of logistics sorting, a quantity of packages are required to be supplied into the cross-belt sorting system in an orderly manner. At present, in the market, the packages are mostly relied on the manual unpacking to pour into the unpacking chute, and then supplied into the three-section semi-automatic package supply machine to enter the cross-belt sorting system after manual picking. This mode has low efficiency, high labor intensity and high labor costs.

### SUMMARY

In view of the disadvantages of the above-mentioned existing production technologies, a fully automatic object supply system for a cross-belt sorting system is provided in the present invention, which can make full use of the efficiency of the cross-belt sorting system, improves the sorting efficiency, and reduces the labor intensity and the labor costs.

The technical solutions adopted in the present invention are as follow.

Provided is a fully automatic object supply system for a cross-belt sorting system, the fully automatic object supply system comprises a belt conveyor, a spiral unpacking chute is arranged at a feeding end of the belt conveyor, a stacked-objects separating device, a scattering device, a single-object separation device, a roller centering machine, a seesawing belt conveyor, a stacked-objects detecting device, an arriving-object detecting device, and a balance wheel sorting machine are sequentially arranged on the belt conveyor along a conveying direction, the balance wheel sorting machine is arranged at a tail section of a discharging end of the belt conveyor, and one or more balance wheel sorting machines are provided, one side of the balance wheel sorting machine is connected at a feeding end of the four-section automatic package supply machine, a feeding end of a return chute is connected at the discharging end of the belt conveyor, and a discharging end of the return chute is connected at a feeding end of the three-section semi-automatic package supply machine.

Further, a special-shaped object chute is arranged on one side of the feeding end of the belt conveyor, special-shaped objects are removed and put into the special-shaped object chute after manual unpacking.

Further, the stacked-objects separating device includes a scattering section, a temporary storage section, a separating section and a transition section that are sequentially arranged along the conveying direction, the scattering section is a roller scattering chute arranged obliquely, and a position of a feeding end of the scattering section is higher than a position of a discharging end of the scattering section, the temporary storage section is a belt conveying mechanism arranged horizontally, and the separating section includes a first climbing conveying section and a second climbing conveying section sequentially arranged along the conveying direction, the first climbing conveying section and the second climbing conveying section are arranged obliquely, a position of a feeding end of the first climbing conveying section is lower than a position of a discharging end of the first climbing conveying section, a position of a feeding end of the second climbing conveying section is lower than a position of a discharging end of the second climbing conveying section, and an inclined angle of the first climbing conveying section is greater than an inclined angle of the second climbing conveying section, the first climbing conveying section includes two belt conveying mechanisms arranged along the conveying direction, the second climbing conveying section includes two belt conveying mechanisms arranged along the conveying direction, the transition section includes a descending conveying section and a horizontal conveying section arranged sequentially along the conveying direction, the descending conveying section is a belt conveying mechanism arranged obliquely, a position of a feeding end of the descending conveying section is higher than a position of a discharging end of the descending conveying section, the horizontal conveying section is a belt conveying mechanism arranged horizontally, a conveying end surface of the discharging end of the scattering section is connected to a conveying end surface of the feeding end of the temporary storage section, an end surface of a roller at the discharging end of the first climbing conveying section is tangent to an end surface of a roller at the feeding end of the second climbing conveying section, and a highest position of the roller at the discharging end of the first climbing conveying section is higher than a highest position of the roller at the feeding end of the second climbing conveying section, and an end surface of a roller at the discharging end of the second climbing conveying section is tangent to an end surface of a roller at the feeding end of the descending conveying section, a highest position of a roller at the discharging end of the second climbing conveying section is higher than a highest position of a roller at the feeding end of the descending conveying section, an end face of a roller at the discharging end of the descending conveying section is tangent to an end surface of a roller at the feeding end of the horizontal conveying section, and a highest position of the roller at the discharging end of the descending conveying section is higher than a highest position of the roller at the feeding end of the horizontal conveying section.

Further, an inclined angle of the scattering section ranges from 20° to 32°, and two sets of unpowered rollers are arranged on the scattering section in a V shape.

Further, side baffles are arranged on left and right sides of the temporary storage section, the first climbing conveying section, the second climbing conveying section, the descending conveying section and the horizontal conveying section, respectively, a first baffle is arranged at a gap position between the side baffle of the temporary storage section and the side baffle of the first climbing conveying section, a second baffle is arranged at a gap position between the side baffle of the first climbing conveying section and the side baffle of the second climbing conveying section, a third baffle is arranged at a gap position between the side baffle of the second climbing conveying section and the side baffle of the descending conveying section, and a fourth baffle is arranged at a gap position between the side baffle of the descending conveying section and the side baffle of the horizontal conveying section, the first baffle, the second baffle, the third baffle and the fourth baffle are capable of preventing the rollers from winding objects, cameras are arranged directly above conveying passages of the scattering section, the temporary storage section, the separating section and the transition section, respectively, and the cameras are capable of monitoring a situation of packages on the conveying passages.

Further, an the four-section fully automatic package supply machine includes a first temporary storage conveying section, a second temporary conveying section, a third temporary storage conveying section sequentially arranged along the conveying direction, the first temporary storage conveying section and the second temporary storage conveying section are both servo power belt transmission structures, and the third temporary storage conveying section is an electric roller narrow-belt transmission structure, a first detecting light curtain is cross-arranged above a feeding end of the first temporary storage conveying section, the first detecting light curtain is arranged on a first detecting light curtain bracket, both ends of the first detecting light curtain bracket are fixed on left and right sides of the first temporary storage conveying section, a second detecting light curtain and a third detecting light curtain are cross-arranged above the feeding end and the discharging end of the second temporary storage conveying section, respectively, and the second detecting light curtain and the third detecting light curtain are both arranged on a second detecting light curtain bracket, both ends of the second detecting light curtain bracket are fixed on left and right sides of the second temporary storage conveying section, respectively, a transition section is arranged at a discharging end of the third temporary storage conveying section, a first package supply conveying section is arranged at a discharging end of the transition section, a second package supply conveying section is arranged at a discharging end of the first package supply conveying section, a third package supply conveying section is arranged at a discharging end of the second package supply conveying section, and a fourth package supply conveying section is arranged at a discharging end of the third package supply conveying section, the transition section, the first package supply conveying section, the second package supply conveying section and the third package supply conveying section are all servo power belt transmission structures, the fourth package supply conveying section is an electric roller narrow-belt transmission structure, a fourth detecting light curtain is cross-arranged directly above the feeding end of the first package supply conveying section, the fifth detecting light curtain and the sixth detecting light curtain are cross-arranged directly above the feeding end and the discharging end of the second package supply conveying section, respectively, the fourth detecting light curtain, the fifth detecting light curtain, and the sixth detecting light curtain are jointly arranged on a third detecting light curtain bracket, and both ends of the third detecting light curtain bracket are arranged on left and right sides of the second package supply conveying section, respectively.

Further, a posture adjustment device is arranged at the feeding end of the four-section fully automatic package supply machine, and the posture adjustment device includes an installation frame, and a plurality of rubber-coated rollers parallel to each other are arranged on an upper surface of the installation frame along a diagonal line, a rubber-coated roller located at an intermediate position of the plurality of rubber-coated rollers is a longest one, a length of the rubber-coated rollers in the plurality of rubber-coated rollers decreases from the intermediate position to left and right sides, side baffles and side installation frames are arranged on left and right sides of the upper end surface of the installation frame, respectively, a first side driving roller and a second side driving roller are rotatably connected at front and rear ends of the installation frame, respectively, a side driving belt is sleeved and arranged on the first side driving roller and the second side driving roller, rolling end surfaces of the plurality of rubber-coated rollers face towards one side of the side driving belt, a light curtain is cross-arranged directly above the plurality of rubber-coated rollers, both ends of the light curtain are fixed on a light curtain bracket, and the light curtain bracket is fixed on left and right sides of the installation frame.

Further, the three-section semi-automatic package supply machine includes a first conveying section, a second conveying section and a third conveying section sequentially arranged along the conveying direction, the first conveying section and the second conveying section are both servo power belt transmission structures, and the third conveying section is an electric roller narrow-belt transmission structure.

Further, side branch belt conveyor is arranged on one side of the belt conveyor side by side, the spiral unpacking chute is arranged at a feeding end of the side branch belt conveyor, the stacked-objects separating device, the scattering device, the single-object separating device, the roller centering machine, the seesawing belt conveyor, the stacked-objects detecting device, the arriving-object detecting device and the balance wheel sorting machine are sequentially arranged on the side branch belt conveyor along the conveying direction, the balance wheel sorting machine is arranged at a tail section of a discharging end of the side branch belt conveyor, one or more balance wheel sorting machines are provided, the discharging end of the side branch belt conveyor is connected to a feeding end of a re-sorting conveyor, the discharging end of the re-sorting conveyor is connected to the belt conveyor, the discharging end of the re-sorting machine is located at an upstream position of the stacked-objects separating device arranged on the belt conveyor.

The benefit effects of present invention are as follows.

The present invention effectively solves the problems of the high labor intensity and the labor costs, can make full use of the efficiency of the cross-belt sorting system, improves the sorting efficiency, reduces the labor intensity and the labor cost, and greatly guarantees that the efficiency of the sorting system can be fully utilized. The modular design of the single machine can implement the rapid replacement and maintenance, which greatly improves the maintainability of the equipment.

### BRIEF DESCRIPTION OF THE DRAWINGS

FIG. 1 illustrates a stereogram of the present invention.
FIG. 2 illustrates a top view of the present invention.
FIG. 3 illustrates a front view of an stacked-objects separating device.
FIG. 4 illustrates a top view of the stacked-objects separating device.
FIG. 5 illustrates a stereogram of a four-section fully automatic package supply machine.
FIG. 6 illustrates a stereogram of a posture adjustment device.
FIG. 7 illustrates a stereogram of a three-section semi-automatic package supply machine.

Reference numerals of the drawings: 1. Spiral unpacking chute; 2. Belt conveyor; 3. Stacked-objects separating device; 3.1. Scattering section; 3.2. Temporary storage section; 3.3. Separating section; 3.3.1. First climbing conveying section; 3.3.2, Second climbing conveying section; 3.4. Transition section; 3.4.1. Descending conveying section; 3.4.2. Horizontal conveying section; 3.5. First baffle; 3.6. Second baffle; 3.7. Third baffle; 3.8. Fourth baffle; 4. Scattering device; 5, Single-object separating device; 6. Roller centering machine; 7. Seesawing belt conveyor; 8, Stacked-objects detecting device; 9. Arriving-object detecting device; 10. Balance wheel sorting machine; 11. Posture adjustment device; 11.1. Installation frame; 11.2. Rubber-coated roller; 11.3. Side baffle; 11.4. Side installation frame; 11.5, First side driving roller; 11.6, Second side driving roller; 11.7. Side driving belt; 11.8. Light curtain bracket; 11.9. Light curtain; 12. Four-section automatic package supply machine; 12.1. First temporary storage conveying section; 12.2. Second temporary storage conveying section; 12.3. Third temporary storage conveying sections; 12.4. First detection light curtain; 12.5. First detecting light curtain bracket; 12.6. Second detecting light curtain bracket; 12.7. Second detecting light curtain; 12.8. Third detecting light curtain; 12.9. Transition section; 12.10. First package supply conveying section; 12.11. Second package supply conveying section; 12.12. Third package supply conveying section; 12.13. Fourth package supply conveying section; 12.14. Third detecting light curtain bracket; 12.15. Fourth detecting light curtain; 12.16. Fifth detecting light curtain; 12.17. Sixth detecting light curtain; 13. Return chute; 14. Three-section semi-automatic package supply machine; 14.1. First conveying section; 14.2. Second conveying section; 14.3. Third conveying section; 15. Special-shaped object chute; 16. Side branch belt conveyor; 17. Re-sorting conveyor.

### DETAILED DESCRIPTION OF THE EMBODIMEN

The specific embodiments of the present invention will be described below with reference to the accompanying drawings.

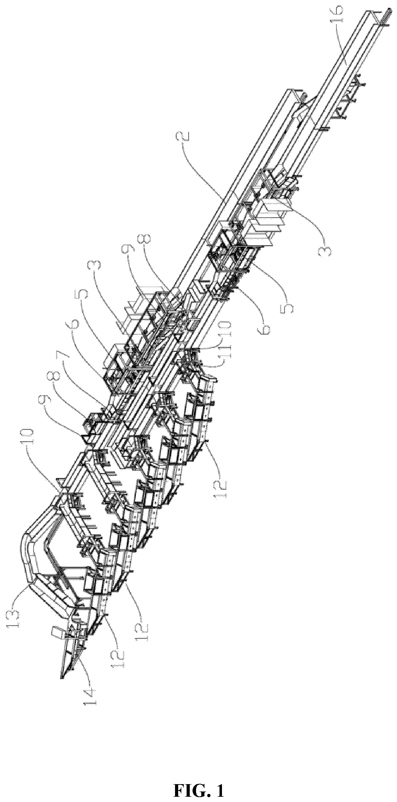

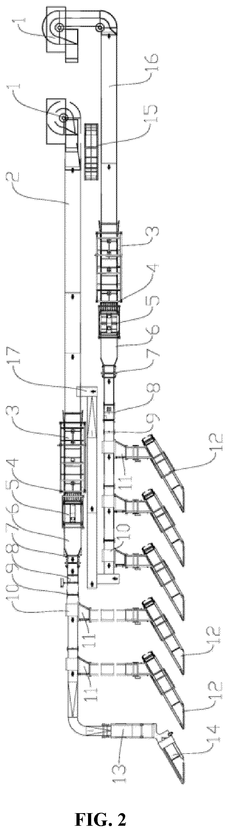

In the embodiment as illustrated in FIG. 1 and FIG. 2, provided is a fully automatic object supply system for a cross-belt sorting system, the fully automatic object supply system includes a belt conveyor 2. A spiral unpacking chute 1 is arranged at a feeding end of the belt conveyor 2. In the process of using the system, after manual unpacking, the packages are poured into the spiral unpacking chute 1, and then flow into the belt conveyor 2. A special-shaped object chute 15 is arranged on one side of the feeding end of the belt conveyor 2, and after manual unpacking, the special-shaped objects are removed and put into the special-shaped object chute 15.

In the embodiment as illustrated in FIG. 1 and FIG. 2, a stacked-objects separating device 3, a scattering device 4, a single-object separating device 5, a roller centering machine 6, a seesawing belt conveyor 7, a stacked-objects detecting device 8, an arriving-object detecting device 9 and a balance wheel sorting machine 10 are sequentially arranged on the belt conveyor 2 along a conveying direction.

During operation, the stacked packages are conveyed to the stacked-objects separating device 3 by the belt conveyor 2, and the stacked-objects separating device 3 can separate the stacked packages into multi-rows of individual packages.

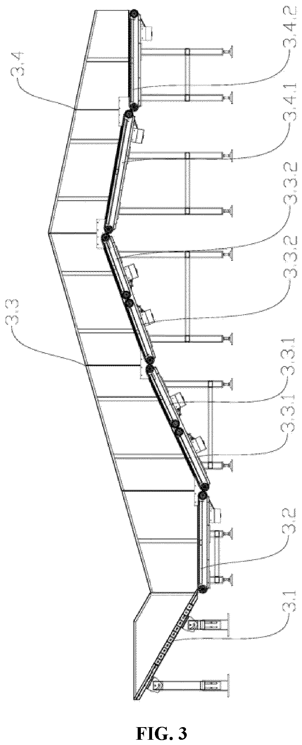

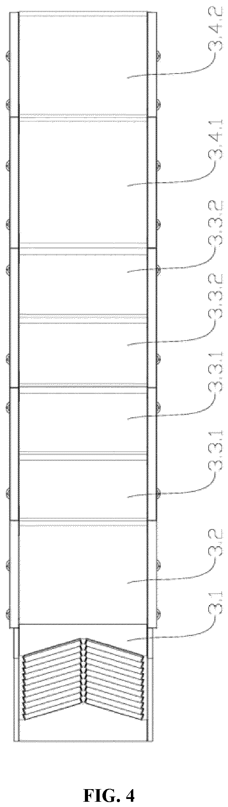

In the embodiment as illustrated in FIG. 3 and FIG. 4, the stacked-objects separating device 3 includes a scattering section 3.1, a temporary storage section 3.2, a separating section 3.3 and a transition section 3.4 sequentially arranged along the conveying direction. The scattering section 3.1 is a roller scattering chute arranged obliquely. A position of the feeding end of the scattering section 3.1 is higher than a position of the discharging end of the scattering chute 3.1. The temporary storage section 3.2 is a belt conveying mechanism arranged horizontally. The separating section 3.3 includes a first climbing conveying section 3.3.1 and a second climbing conveying section 3.3.2 sequentially arranged along the conveying direction, and the first climbing conveying section 3.3.1 and the second climbing conveying section 3.3.2 are arranged obliquely, a position of the feeding end of the first climbing conveying section 3.3.1 is lower than a position of the discharging end of the first climbing section 3.3.1, a position of the feeding end of the second climbing conveying section 3.3.2 is lower than a position of the discharging end of the second climbing section 3.3.2. An inclined angle of the first climbing conveying section is greater than an inclined angle of the second climbing conveying section 3.3.2. The first climbing conveying section 3.3.1 includes two belt conveying mechanisms arranged along the conveying direction, and the second climbing conveying section 3.3.2 includes two belt conveying mechanisms arranged along the conveying direction. The transition section 3.4 includes a descending conveying section 3.4.1 and a horizontal conveying section 3.4.2 sequentially arranged along the conveying direction. The descending conveying section 3.4.1 is a belt conveying mechanism arranged obliquely, and a position of the feeding end of the descending conveying section 3.4.1 is higher than a position of the discharging end of the descending conveying section 3.4.1. The horizontal conveying section 3.4.2 is a belt conveying mechanism arranged horizontally.

In the embodiment as illustrated in FIG. 3 and FIG. 4, the conveying end surface of the discharging end of the scattering section 3.1 is connected to the conveying end surface of the feeding end of the temporary storage section 3.2. The end surface of the roller at the discharging end of the first climbing conveying section 3.3.1 is tangent to the end surface of the roller at the feeding end of the second climbing conveying section 3.3.2, and a highest position of the roller at the discharging end of the first climbing conveying section 3.3.1 is higher than a highest position of the roller at the feeding end of the second climbing conveying section 3.3.2. The end surface of the roller at the discharging end of the second climbing conveying section 3.3.2 is tangent to the end surface of the roller at the feeding end of the descending conveying section 3.4.1, the highest position of the roller at the discharging end of the second climbing conveying section 3.3.2 is higher than the highest position of the roller at the feeding end of the descending conveying section 3.4.1. The end face of the roller at the discharging end of the descending conveying section 3.4.1 is tangent to the end surface of the roller at the feeding end of the horizontal conveying section 3.4.2, and a highest position of the end surface of the roller at the discharging end of the descending conveying section 3.4.1 is higher than the end surface of the roller at the feeding end of the horizontal conveying section 3.4.2.

In the embodiment as illustrated in FIG. 3 and FIG. 4, the inclined angle of the scattering section 3.1 ranges from 20° to 32°, and two sets of unpowered rollers are arranged on the scattering section 3.1 in a V-shape.

In the embodiment as illustrated in FIG. 3 and FIG. 4, the side baffles are arranged on left and right sides of the temporary storage section 3.2, the first climbing conveying section 3.3.1, the second climbing conveying section 3.3.2, the descending conveying section 3.4.1 and the horizontal conveying section 3.4.2, respectively. A first baffle 3.5 is arranged at a gap position between the side baffle of the temporary storage section 3.2 and the side baffle of the first climbing conveying section 3.3.1, a second baffle 3.6 is arranged at a gap position between the side baffle of the first climbing conveying section 3.3.1 and the side baffle of the second climbing conveying section 3.3.2, a third baffle 3.7 is arranged at a gap position between the side baffle of the second climbing conveying section 3.3.2 and the side baffle of the descending conveying section 3.4.1, and a fourth baffle 3.8 is arranged at a gap position between the side baffle of the descending conveying section 3.4.1 and the side baffle of the horizontal conveying section 3.4.2. The first baffle 3.5, the second baffle 3.6, the third baffle 3.7 and the fourth baffle 3.8 are capable of preventing the roller from winding the packages.

In the embodiment as illustrated in FIG. 3 and FIG. 4, cameras are arranged directly above the conveying passages of the scattering section 3.1, the temporary storage section 3.2, the separating section 3.3 and the transition section 3.4, respectively, and the cameras are capable of monitoring the situations of the packages in the conveying passages.

The operating principle of the stacked-objects separating device 3 is as follows. Along the conveying direction of the objects, the roller chute of the scattering section 3.1 plays a preliminary separation role, and the packages are evenly spread towards both sides after passing through the unpowered rollers arranged in a V-shape. The preliminarily separated packages are conveyed to the temporary storage section 3.2, and are ready to be conveyed to the separating section 3.3. The first climbing conveying section 3.3.1 of the separating section 3.3 plays a secondary separation role, some of the packages located on an upper part of the stacked packages are slid downwards due to the angles of the first climbing conveying section 3.3.1, and since a velocity difference is generated between the two conveying mechanisms at the front and rear of the first climbing conveying section 3.3.1, the stacking degree of the packages is to be further relieved. The second climbing conveying section 3.3.2 of the separating section 3.3 plays a third separation role, through the first two separations, the remaining stacked packages are completely separated caused by the velocity difference between the two belt conveying mechanisms at the front and rear of the second climbing section 3.3.2. The descending slope of the transitional section 3.4 is configured to compensate, a leap of a certain arc is produced by the packages after passing through the second climbing conveying section 3.3.2 with a high velocity, so that a small number of possible stacked objects pressed by heavy objects and difficult to be handled are fallen off and then scattered.

In the embodiment as illustrated in FIG. 1 and FIG. 2, the balance wheel sorting machine 10 is arranged at a tail section of the discharging end of the belt conveyor 2, and one or more balance wheel sorting machine are provided.

In the embodiment as illustrated in FIG. 1 and FIG. 2, one side of the balance wheel sorting machine 10 is connected at the feeding end of the four-section automatic package supply machine 12.

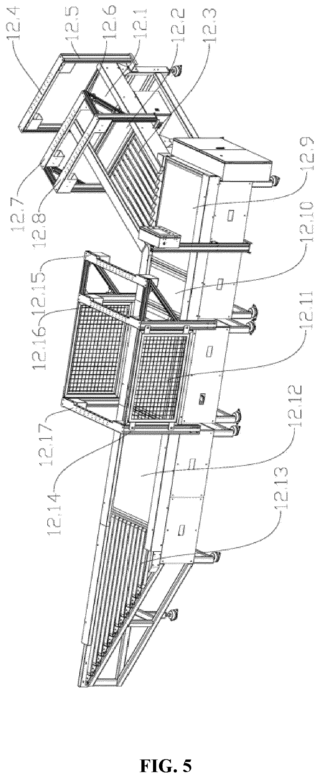

In the embodiment as illustrated in FIG. 5, the four-section fully automatic package supply machine 12 includes a first temporary storage conveying section 12.1, a second temporary storing conveying section 12.2 and a third temporary storing conveying section 12.3 that are sequentially arranged along the conveying direction. Both the temporary storage conveying section 12.1 and the second temporary storing conveying section 12.2 are the servo power belt transmission structures, and the third temporary storage conveying section 12.3 is the electric roller narrow-belt transmission structure. The first detecting light curtain 12.4 is cross-arranged above the feeding end of the first temporary storage conveying section 12.1, the first detecting light curtain 12.4 is arranged on the first detecting light curtain bracket 12.5, and both ends of the first detecting light curtain bracket 12.5 are fixed on the left and right sides of the first temporary storage conveying section 12.1, respectively. A second detecting light curtain 12.7 and a third detecting light curtain 12.8 are cross-arranged above the feeding end and the discharging end of the second temporary storage conveying section 12.2, respectively. The second detecting light curtain 12.7 and the third detecting light curtain 12.8 are arranged on the second detecting light curtain bracket 12.6, and both ends of the second detecting light curtain bracket 12.6 are fixed on the left and right sides of the second temporary storage conveying section 12.2, respectively.

In the embodiment as illustrated in FIG. 5, a transition section 12.9 is arranged at the discharging end of the third temporary storage conveying section 12.3. A first package supply conveying section 12.10 is arranged at the discharging end of the transition section 12.9, a second package supply conveying section 12.11 is arranged at the discharging end of the first package supply conveying section 12.10, a third package supply conveying section 12.12 is arranged at the discharging end of the second package supply conveying section 12.11, and a fourth package supply conveying section 12.13 is arranged at the discharging end of the third package supply conveying section 12.12. The transition section 12.9, the first package supply conveying section 12.10, the second package supply conveying section 12.11 and the third package supply conveying section 12.12 are all the servo power belt transmission structures, and the fourth package supply conveying section 12.13 is the electric roller narrow-belt transmission structure. The fourth detecting light curtain 12.15 is cross-arranged directly above the feeding end of the first package conveying section 12.10, and the fifth detecting light curtain 12.16 and the sixth detecting light curtain 12.17 are cross-arranged directly above the feeding end and the discharging end of the second package conveying section 12.11, respectively. The fourth detecting light curtain 12.15, the fifth detecting light curtain 12.16 and the sixth detecting light curtain 12.17 are all arranged on the third detecting light curtain bracket 12.14, and both ends of the third detecting light curtain bracket 12.14 are fixed on the left and right sides of the second package supply conveying section 12.11, respectively.

In order to ensure that the packages entering the four-section automatic package supply machine 12 are in the desired postures, in the embodiment as illustrated in FIG. 1 and FIG. 2, a posture adjustment device 11 is provided at the feeding end of the four-section automatic supply machine 12.

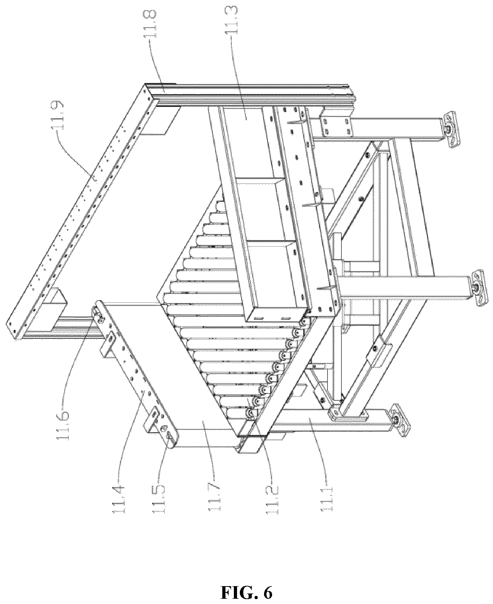

In the embodiment as illustrated in FIG. 6, the posture adjustment device 11 includes an installation frame 11.1, a plurality of rubber-coated rollers 11.2 parallel to each other are sequentially arranged on an upper end surface of the installation frame 11.1 along a diagonal line. A rubber-coated roller 11.2 located at an intermediate position of the plurality of the rubber-coated rollers 11.2 is a longest one, and the length of the rubber-coated roller 11.2 in the plurality of rubber-coated rollers (11.2) decreases from the intermediate position to the left and right sides. The side baffles 11.3 and the side installation frames 11.4 are arranged on the left and right sides of the upper end surface of the installation frame 11.1, respectively. The first side driving roller 11.5 and the second side driving roller 11.6 are rotatably connected at the front end and the rear ends of the side installation frame 11.4, respectively. The side driving belt 11.7 is sleeved and arranged on the first side driving roller 11.5 and the second side driving roller 11.6. The rolling end surfaces of the plurality of rubber-coated rollers 11.2 face towards one side of the side driving belt 11.7. The light curtain 11.9 is cross-arranged directly above the plurality of rubber-coated rollers 11.2. Both ends of the light curtain 11.9 are fixed on the light curtain bracket 11.8, and the light curtain bracket 11.8 is fixedly arranged on the left and right sides of the installation frame 11.1.

In the embodiment as illustrated in FIG. 1 and 2, the discharging end of the belt conveyor 2 is connected to the feeding end of the return chute 13, and the discharging end of the return chute 13 is connected to the feeding end of the three-section semi-automatic package supply machine 14.

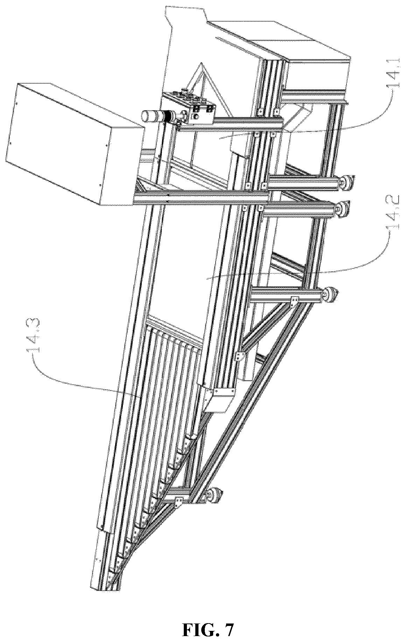

In the embodiment as illustrated in FIG. 7, the three-section semi-automatic package supply machine 14 includes a first conveying section 14.1, a second conveying section 14.2 and a third conveying section 14.3 sequentially arranged along the conveying direction, and the first conveying section 14.1 and the second convey section 14.2 are both servo power belt transmission structures, and the third conveying section 14.3 is the electric roller narrow-belt transmission structure.

In another embodiment, in the embodiment as illustrated in FIG. 1 and FIG. 2, the side branch belt conveyor 16 is arranged on the side of belt conveyor 2 side by side, a spiral unpacking chute 1 is arranged at the feeding end of side branch belt conveyor 16, a stacked-objects separating device 3, a scattering device 4, a single-object separating device 5, a roller centering machine 6, a seesawing belt conveyor 7, a stacked-objects detecting device 8, an arriving-object detecting device 9 and a balance wheel sorting machine 10 are sequentially arranged on the side branch belt conveyor 16 along the conveying direction. The balance wheel sorting machine 10 is arranged at a tail section of the discharging end of the side branch belt conveyor 16, and one or more balance wheel sorting machines 10 are provided.

In the embodiment as illustrated in FIG. 1 and FIG. 2, the discharging end of side branch belt conveyor 16 is connected to the feeding end of re-sorting conveyor 17, and the discharging end of the re-sorting conveyor 17 is connected to belt conveyor 2, the discharging end of the re-sorting conveyor 17 is located at an upstream position of the stacked-objects separating device 3 arranged on the belt conveyor 2.

The operating process of the present invention is as follows. When the packages are sorted, firstly, the packages are manually unpacked and poured into the spiral chute 1, then flowed into the belt conveyor 2, and the special-shaped objects are manually removed and put into the special-shaped object chute 15 on one side of the belt conveyor 2. The normal objects are conveyed to the stacked-objects separating device by the belt conveyor 2, and the stacked packages are separated into multi-rows of individual packages by the staked-object separating device 3. The separated packages are conveyed to the scattering device 4, the distance between the adjacent packages is increased by the scattering device 4 to form multi-rows of individual packages. Sequentially, the multi-rows of individual packages are separated into equidistant single row of individual package through the multi-segment servo power belt distributed in 4 X 10 of the single-object separating device 5 in cooperation with the top camera. The single row of individual package is adjusted to a centered posture by the roller centering machine 6 utilizing the rubber-coated rollers that gradually move closer from both sides to intermediate position. Then, the packages are entered the seesawing belt conveyor 7, and the distance between the adjacent packages are fine-turned by the seesawing belt conveyor 7 utilizing the photoelectric sensing distance.. The unseparated stacked packages with small distance between the adjacent packages are not entered the four-section automatic package supply machine 12, but conveyed to the return chute 13 by the belt conveyor 2 after detecting by the stacked-objects detecting device 8, and the packages conveyed from the return chute 13 are flowed into the three-section semi-automatic package feeding machine 14 by manual supply and imported into the cross-belt sorting system. After the packages that satisfy the requirement of entering the four-section automatic package supply machine 12 are determined to be arrived by the package arrival detection device 9, then the packages are imported into the posture adjustment device 11 by the balance wheel sorting machine 10. When the packages are adjusted to an entering posture, the packages are imported into the cross-belt sorting system by the four-section automatic package supply machine 12. In order to improve the sorting efficiency, another side branch belt conveyor 16 can be arranged on one side of the belt conveyor 2 side by side to sort the packages synchronously.

The present invention effectively solves the problems of high manual labor intensity and high labor costs in the package sorting, greatly ensures that the efficiency of the cross-belt sorting system can be fully utilized, and improves the sorting efficiency. And the modular design of the single machine can implement the rapid replacement and maintenance, which greatly improves the ease of maintenance of the equipment. The present invention can satisfy the feeding of 10000pcs/h through the fully automatic feeding system, which fully satisfies the efficiency of the cross-belt sorting system and greatly improves the sorting efficiency. The modular design of a single machine can implement the rapid replacement and maintenance, which greatly improves the ease of maintenance of the equipment.

The above description is an explanation of the present invention, not a limitation of the present invention. For the limited scope of the present invention, refer to the claims, and any form of the modification can be made within the protection scope of the present invention.

## Claims

1. A fully automatic object supply system for a cross-belt sorting system, comprising a belt conveyor (2), **characterized in that** a spiral unpacking chute (1) is arranged at a feeding end of the belt conveyor (2), a stacked-objects separating device (3), a scattering device (4), a single-object separation device (5), a roller centering machine (6), a seesawing belt conveyor (7), a stacked-objects detecting device (8), an arriving-object detecting device (9), and a balance wheel sorting machine (10) are sequentially arranged on the belt conveyor (2) along a conveying direction, the balance wheel sorting machine (10) is arranged at a tail section of a discharging end of the belt conveyor (2), and one or more balance wheel sorting machines are provided, one side of the balance wheel sorting machine (10) is connected at a feeding end of the four-section automatic package supply machine (12), a feeding end of a return chute (13) is connected at the discharging end of the belt conveyor (2), and a discharging end of the return chute (13) is connected at a feeding end of the three-section semi-automatic package supply machine (14).

2. The fully automatic object supply system for the cross-belt sorting system according to claim 1, **characterized in that** a special-shaped object chute (15) is arranged on one side of the feeding end of the belt conveyor (2), special-shaped objects are removed and put into the special-shaped object chute after manual unpacking.

3. The fully automatic object supply system for the cross-belt sorting system according to claim 1, **characterized in that** the stacked-objects separating device (3) includes a scattering section (3.1), a temporary storage section (3.2), a separating section (3.3) and a transition section (3.4) that are sequentially arranged along the conveying direction, the scattering section (3.1) is a roller scattering chute arranged obliquely, and a position of a feeding end of the scattering section (3.1) is higher than a position of a discharging end of the scattering section (3.1), the temporary storage section (3.2) is a belt conveying mechanism arranged horizontally, and the separating section (3.3) includes a first climbing conveying section (3.3.1) and a second climbing conveying section (3.3.2) sequentially arranged along the conveying direction, the first climbing conveying section (3.3.1) and the second climbing conveying section (3.3.2) are arranged obliquely, a position of a feeding end of the first climbing conveying section (3.3.1) is lower than a position of a discharging end of the first climbing conveying section (3.3.2), a position of a feeding end of the second climbing conveying section (3.3.2) is lower than a position of a discharging end of the second climbing conveying section (3.3.2), and an inclined angle of the first climbing conveying section (3.3.1) is greater than an inclined angle of the second climbing conveying section (3.3.2), the first climbing conveying section (3.3.1) includes two belt conveying mechanisms arranged along the conveying direction, the second climbing conveying section (3.3.2) includes two belt conveying mechanisms arranged along the conveying direction, the transition section (3.4) includes a descending conveying section (3.4.1) and a horizontal conveying section (3.4.2) arranged sequentially along the conveying direction, the descending conveying section (3.4.1) is a belt conveying mechanism arranged obliquely, a position of a feeding end of the descending conveying section (3.4.1) is higher than a position of a discharging end of the descending conveying section (3.4.1), the horizontal conveying section (3.4.2) is a belt conveying mechanism arranged horizontally, a conveying end surface of the discharging end of the scattering section (3.1) is in connection to a conveying end surface of the feeding end of the temporary storage section (3.2), an end surface of a roller at the discharging end of the first climbing conveying section (3.3.1) is tangent to an end surface of a roller at the feeding end of the second climbing conveying section (3.3.2), and a highest position of the roller at the discharging end of the first climbing conveying section (3.3.1) is higher than a highest position of the roller at the feeding end of the second climbing conveying section (3.3.2), and an end surface of a roller at the discharging end of the second climbing conveying section (3.3.2) is tangent to an end surface of a roller at the feeding end of the descending conveying section (3.4.1), a highest position of a roller at the discharging end of the second climbing conveying section (3.3.2) is higher than a highest position of a roller at the feeding end of the descending conveying section (3.4.1), an end face of a roller at the discharging end of the descending conveying section (3.4.1) is tangent to an end surface of a roller at the feeding end of the horizontal conveying section (3.4.2), and a highest position of the roller at the discharging end of the descending conveying section (3.4.1) is higher than a highest position of the roller at the feeding end of the horizontal conveying section (3.4.2).

4. The fully automatic object supply system for the cross-belt sorting system according to claim 3, **characterized in that** an inclined angle of the scattering section (3.1) ranges from 20° to 32°, and two sets of unpowered rollers are arranged on the scattering section (3.1) in a V shape.

5. The fully automatic object supply system for the cross-belt sorting system according to claim 3, **characterized in that** side baffles are arranged on left and right sides of the temporary storage section (3.2), the first climbing conveying section (3.3.1), the second climbing conveying section (3.3.2), the descending conveying section (3.4.1) and the horizontal conveying section (3.4.2), respectively, a first baffle (3.5) is arranged at a gap position between the side baffle of the temporary storage section (3.2) and the side baffle of the first climbing conveying section (3.3.1), a second baffle (3.6) is arranged at a gap position between the side baffle of the first climbing conveying section (3.3.1) and the side baffle of the second climbing conveying section (3.3.2), a third baffle (3.7) is arranged at a gap position between the side baffle of the second climbing conveying section (3.3.2) and the side baffle of the descending conveying section (3.4.1), and a fourth baffle (3.8) is arranged at a gap position between the side baffle of the descending conveying section (3.4.1) and the side baffle of the horizontal conveying section (3.4.2), the first baffle (3.5), the second baffle (3.6), the third baffle (3.7) and the fourth baffle (3.8) are capable of preventing the rollers from winding objects, cameras are arranged directly above conveying passages of the scattering section (3.1), the temporary storage section (3.2), the separating section (3.3) and the transition section (3.4), respectively, and the cameras are capable of monitoring a situation of packages in the conveying passages.

6. The fully automatic object supply system for the cross-belt sorting system according to claim 1, **characterized in that** the four-section fully automatic package supply machine (12) includes a first temporary storage conveying section (12.1), a second temporary conveying section (12.2), a third temporary storage conveying section (12.3) sequentially arranged along the conveying direction, the first temporary storage conveying section (12.1) and the second temporary storage conveying section (12.2) are both servo power belt transmission structures, and the third temporary storage conveying section (12.3) is an electric roller narrow-belt transmission structure, a first detecting light curtain (12.4) is cross-arranged above a feeding end of the first temporary storage conveying section (12.1), the first detecting light curtain (12.4) is arranged on a first detecting light curtain bracket (12.5), both ends of the first detecting light curtain bracket (12.5) are fixed on left and right sides of the first temporary storage conveying section (12.1), a second detecting light curtain (12.7) and a third detecting light curtain (12.8) are cross-arranged above the feeding end and the discharging end of the second temporary storage conveying section (12.2), respectively, and the second detecting light curtain (12.7) and the third detecting light curtain (12.8) are both arranged on a second detecting light curtain bracket (12.6), both ends of the second detecting light curtain bracket (12.6) are fixed on left and right sides of the second temporary storage conveying section (12.2), respectively, a transition section (12.9) is arranged at a discharging end of the third temporary storage conveying section (12.3), a first package supply conveying section (12.10) is arranged at a discharging end of the transition section (12.9), a second package supply conveying section (12.11) is arranged at a discharging end of the first package supply conveying section (12.10), a third package supply conveying section (12.12) is arranged at a discharging end of the second package supply conveying section (12.11), and a fourth package supply conveying section (12.13) is arranged at a discharging end of the third package supply conveying section (12.12), the transition section (12.9), the first package supply conveying section (12.10), the second package supply conveying section (12.11) and the third package supply conveying section (12.12) are all servo power belt transmission structures, the fourth package supply conveying section (12.13) is an electric roller narrow-belt transmission structure, a fourth detecting light curtain (12.15) is cross-arranged directly above the feeding end of the first package supply conveying section (12.10), the fifth detecting light curtain (12.16) and the sixth detecting light curtain (12.17) are cross-arranged directly above the feeding end and the discharging end of the second package supply conveying section (12.11), respectively, the fourth detecting light curtain (12.15), the fifth detecting light curtain (12.16), and the sixth detecting light curtain (12.17) are jointly arranged on a third detecting light curtain bracket (12.14), and both ends of the third detecting light curtain bracket (12.14) are arranged on left and right sides of the second package supply conveying section (12.11), respectively.

7. The fully automatic package supply system for the cross-belt sorting system according to claim 1, **characterized in that** a posture adjustment device (11) is arranged at the feeding end of the four-section fully automatic package supply machine (12), and the posture adjustment device (11) includes an installation frame (11.1), and a plurality of rubber-coated rollers (11.2) parallel to each other are sequentially arranged on an upper surface of the installation frame (11.1) along a diagonal line, a rubber-coated roller located at an intermediate position of the plurality of rubber-coated rollers (11.2) is a longest one, a length of the rubber-coated roller in the plurality of rubber-coated rollers (11.2) decreases from the intermediate position to left and right sides, side baffles (11.3) and side installation frame (11.4) are arranged on left and right sides of the upper end surface of the installation frame (11.1), respectively, a first side driving roller (11.5) and a second side driving roller (11.6) are rotatably connected at front and rear ends of the installation frame (11.4), respectively, a side driving belt (11.7) is sleeved and arranged on the first side driving roller (11.5) and the second side driving roller (11.6), rolling end surfaces of the plurality of rubber-coated rollers face towards one side of the side driving belt (11.7), a light curtain (11.9) is cross-arranged directly above the plurality of rubber-coated rollers (11.2), both ends of the light curtain (11.9) are fixed on a light curtain bracket (11.8), and the light curtain bracket (11.8) is fixed on left and right sides of the installation frame (11.1).

8. The fully automatic object supply system for the cross-belt sorting system according to claim 1, **characterized in that** the three-section semi-automatic package supply machine (14) includes a first conveying section (14.1), a second conveying section (14.2) and a third conveying section (14.3) sequentially arranged along the conveying direction, the first conveying section (14.1) and the second conveying section (14.2) are both servo power belt transmission structures, and the third conveying section (14.3) is an electric roller narrow-belt transmission structure.

9. The fully automatic object supply system for the cross-belt sorting system according to any one of claims 1 to 8, **characterized in that** side branch belt conveyor (16) is arranged on one side of the belt conveyor (2) side by side, the spiral unpacking chute (1) is arranged at a feeding end of the side branch belt conveyor (16), the stacked-objects separating device (3), the scattering device (4), the single-object separating device (5), the roller centering machine (6), the seesawing belt conveyor (7), the stacked-objects detecting device (8), the arriving-object detecting device (9) and the balance wheel sorting machine (10) are sequentially arranged on the side branch belt conveyor (16) along the conveying direction, the balance wheel sorting machine (10) is arranged at a tail section of a discharging end of the side branch belt conveyor (16), one or more balance wheel sorting machines (10) are provided, the discharging end of the side branch belt conveyor (16) is connected to a feeding end of a re-sorting conveyor (17), the discharging end of the re-sorting conveyor (17) is connected to the belt conveyor (2), the discharging end of the re-sorting machine (17) is located at an upstream position of the stacked-objects separating device (3) arranged on the belt conveyor (2).
